# EUROPÄISCHE PATENTSCHRIFT

(11) **EP 2 495 282 B1**
(45) Veröffentlichungstag und Bekanntmachung des Hinweises auf die Patenterteilung: **16.10.2013**
(21) Anmeldenummer: 12170404.3
(22) Anmeldetag: 19.12.2006
(51) Int. Cl.: C08L 51/08, C09J 151/08, C09D 151/08, C08F 289/00, C08L 33/00, C09J 133/00, C09D 133/00, C08G 63/00, C08F 283/01, C08L 51/06, C09D 151/06, C09J 151/06

(54) **Heißversiegelungsmasse für Aluminium- und Polyethylenterephthalatfolien gegen Polyvinylchlorid- und Polystyrolbehälter**
Heat-sealing material for aluminum foils and polyethylene terephthalate foils against polyvinyl chloride, and polystyrol containers
Masse pour scellement thermique pour feuilles d'aluminium et de téréphtalate de polyéthylène contre un récipient en polystyrène et chlorure de polyvinyle

(30) Priorität: 28.02.2006 DE 102006009586
(43) Veröffentlichungstag der Anmeldung: 05.09.2012
(62) Teilanmeldung aus: 06830703.2
(73) Patentinhaber: Evonik Röhm GmbH, 64293 Darmstadt (DE)
(72) Erfinder: Löhden, Gerd, Dr., 45136 Essen (DE); Balk, Sven, Dr., 60594 Frankfurt (DE); Kaufmann, Marita, Dr., 64347 Griesheim (DE); Schröder, Axel, Dr., 64354 Reinheim (DE); Brand, Thorsten, Dr., 45772 Marl (DE); Brenner, Gabriele, 48249 Dülmen (DE)

(56) Entgegenhaltungen:
- WO-A1-03/010256
- US-A1- 2003 113 462

## Beschreibung

### Gebiet der Erfindung

Im Bereich der Verpackung von Lebensmitteln und Tabletten haben außer Polystyrol (PS) und Polyvinylchlorid (PVC) seit einiger Zeit auch Polypropylen (PP) und Polyethylenterephthalat (PET) Einzug gehalten. Unvorbehandeltes Polypropylen ist für den Lacksektor ein sehr kritischer Kunststoff, da sehr oft Haftfestigkeitsprobleme auftreten. Diese Problematik ist beim Heißversiegeln gegen Polypropylen zwar etwas anders gelagert (PP wird hier nicht beschichtet, sondern "verklebt"), aber doch ebenfalls vorhanden. So kann man die bei der Polystyrol- oder PVC-Versiegelung bewährten Poly(meth)acrylatharze wie z. B. DEGALAN ^{®} P 24 oder DEGALAN ^{®} N 80, nicht einsetzen, weil Siegelnahtfestigkeit mit ihnen nicht erreichbar ist.

DEGALAN ^{®} P24 ist ein Copolymer aus Methylmethacrylat und Butylmethacrylat und wird von der Röhm GmbH & Co. KG in den Handel gebracht. DEGALAN ^{®} N80 ist ein Methylacrylat-Ethylmethacrylat-Copolymer und wird ebenfalls von der Röhm GmbH & Co. KG in den Handel gebracht.

Mit DEGALAN ^{®} PM 555 (Hersteller: Röhm GmbH & Co. KG), einem speziellen, lösemittelhaltigen Bindemittelsystem auf Basis von Polyolefin/Poly(meth)acrylat in Butylacetat/Methylethylketon, ist es gelungen, ein Bindemittel zu entwickeln, das für die Versiegelung von Aluminiumfolien gegen Polypropylen hervorragend geeignet ist. Darüber hinaus ist es mit DEGALAN ^{®} PM 555 aber auch möglich, ebenso gute Versieglungen gegen Polystyrol und PVC durchzuführen. DEGALAN ^{®} PM 555 muss zur Erzielung der Aluminiumhaftung mit PVC-Mischpolymerisaten wie z. B. VINYLITE ^{®} VMCH grundiert, kann aber auch in entsprechender Kombination als Einschichtsystem eingesetzt werden. VINYLITE ^{®} VMCH ist ein säurehaltiges PVC-Polymer (Vertrieb: Union Carbide).

DEGALAN ^{®} 4150-E (Hersteller: Röhm GmbH & Co. KG) schließlich wurde entwickelt, um die bekannte Heißsiegelmasse für Aluminium- und Kunststofffolien so zu verbessern, dass anstelle des bisher üblichen lösungsmittelhaltigen Bindemittelsystems aus Butylacetat und Methylethylketon ein Lösungsmittelsystem eingesetzt werden kann, das nicht in der HAPS-Liste (Hazardous Air Pollutants) aufgelistet ist.

### Stand der Technik

An die Stelle von Gefäßen und Behältern aus Holz oder aus anorganischen Werkstoffen wie Metall, Glas, Keramik in der Lebensmittelverpackung sind in der Gegenwart vielfach Kunststoffprodukte getreten. Besonders hoch sind die Anforderungen in jedem Falle, wenn die Gefäße bzw. Behälter zur Aufnahme bzw. Konservierung von Lebensmitteln dienen.

Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, Kontrolle des Wassergehalts, sowie die Einwirkung der Atmosphäre und des Lichts zu berücksichtigen. (Vgl. Ullmann's Encyclopedia of Industrial Chemistry 25th Ed. Vol. A11, 523 - 560; 583 - 618 VCH 1988; dort werden auch die geltenden Normen abgehandelt).

Zum Verschließen von Kunststoffgefäßen werden in der Lebensmitteltechnologie, insbesondere bei Molkereiprodukten wie Joghurtbechern, weithin mit einem Siegellack beschichtete Aluminiumdeckel verwendet.

Vielfach stellen derartige Aluminiumdeckel ein dreischichtiges Laminat dar, dessen äußere Schicht häufig aus (biaxial orientiertem) Polyethylenterephthalat (O-PET), biaxial orientiertem Polypropylen (OPP) oder Polyamid (O-PA) oder aus Cellulose besteht. Die heißsiegelbare, innere Schicht besteht dagegen gewöhnlich aus Polyethylen, Ethylen-Copolymerisaten oder Polypropylen (US-A 4 753 708; G. Stehle, Neue Verpackung 9/91, S. 94 -101). Gegen die Verwendung von Aluminium z. B. zur Verpackung von Lebensmitteln werden aber mehr und mehr ökonomische und ökologische Gründe in die Diskussion gebracht, insbesondere der hohe Energieaufwand bei der Herstellung des Aluminiums.

Es kommen daher auch Kunststofffolien anstelle von Aluminium zur Anwendung, die mit einem siegelfähigen Lack versehen sind. Der Siegellack wird dabei dem verwendeten Kunststoff angepasst. Als relativ preisgünstiges Material für siegelfähige Folien mit guter mechanischer Festigkeit und guten Barriereeigenschaften spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann. Eine wachsende Bedeutung kommt PET-Folien zu. Üblicherweise werden PET-Folien mittels Polyvinylacetat bzw. Polyethylen/Polyvinylacetat oder Polyester-Lacken gesiegelt. Diese Systeme wurden jedoch spezifisch zur Siegelung von PET-Trägermaterialien entwickelt und sind nur bedingt geeignet zur Siegelung von Aluminium-Folien bzw. Aluminium-Beschichtungen auf Verbundfolien. Bis dato ist kein Heißsiegelbindemittel bekannt, dass bei geeigneter Formulierung sowohl zur Versiegelung von Aluminium- als auch von PET-Folien bzw. -Folienbeschichtungen geeignet ist.

In der DE-A 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen.

In der EP-A 0 406 681 wird aber zu Recht auf die Problematik bei Verwendung von heißsiegelfähigen Kunststoff-Folien anstelle von Aluminiumfolie hingewiesen. Einschränkend bemerkbar macht sich im Regelfall die wesentlich engere Verarbeitungsbreite. Überwiegend ergibt sich ein sehr enger Verarbeitungsbereich von 10 °C bis 20 °C, der ziemlich konstant eingehalten werden muss, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. Die EP-A 0 406 681 hatte sich zur Aufgabe gesetzt, die nach dem Koextrusionsverfahren gemäß DE-A 35 31 036 herstellbaren Folien auf Polystyrolbasis u.a. so zu verbessern, dass die Verarbeitungsbreite und die Verarbeitungssicherheit vergrößert werden. Ferner sollte eine einwandfreie Produktion auch auf Abfüllanlagen mit mehreren Abfüllkavitäten sichergestellt werden. In der Praxis läuft dies auf die Anwendung höherer Siegeltemperaturen mit entsprechenden Anforderungen an die Qualität der Kunststoff-Folien hinaus. Nach der EP-A 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D zur Verbindung von jeweils zweien der Schichten A, gegebenenfalls B und C, bestehend aus 1 % bis 50% einer Schicht aus einem heißsiegelfähigen, schlagzähen Polystyrol A, bis zu 95% einer Trägerschicht B und 1 % bis 99% einer hochschmelzenden Kunststoffschicht C, wobei die Summe der Stärken oder des Gewichts von A und gegebenenfalls B und C jeweils 100 ist.

DE 101 50 898 (Röhm) betrifft ein Heißsiegelsystem aus einem Olefinpolymer oder Olefincopolymer A, einem Methacrylatcopolymer B und einem Pfropfpolymerisat AX aus den obenstehenden Komponenten sowie einem Lösungsmittel oder Lösungsmittelgemisch. Das Heißsiegelsystem zeichnet sich durch hohe Wärmestandfestigkeit und kurze Siegelzeiten aus.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

### Aufgabe

Aufgabe der vorliegenden Erfindung war es durch Entwicklung und Formulierung geeigneter Polymere Heißsiegellacke zu ermöglichen, die dazu geeignet sind, PET-Folien bzw. PET-beschichtete Folien gegen unterschiedliche Bechermaterialien zu versiegeln.

Eine erste Aufgabe war es, ein Bindemittel zu entwickeln, das dazu geeignet ist, PET-Folien bzw. PET-beschichtete Folien gegen Bechermaterialien wie Polystyrol, Polyester, oder Polyvinylchlorid zu verschließen. Bei den aufgeführten Polyestern kann es sich zum Beispiel um amorphes Polyethylenterephthalat (A-PET) handeln.

Es bestand darüber hinaus die Aufgabe, dass bei den üblichen Taktzeiten, die bei der Heißsiegelung von Kunststofffolien angewandt werden, ausreichend hohe Festigkeiten des Verschlusses erreicht werden.

Eine zweite Aufgabe war es, ein Heißsiegellackbindemittel zu entwickeln, das dazu geeignet ist, sowohl Aluminium- als auch PET-Folien bzw. sowohl Aluminium- als auch PET-beschichtete Folien gegen verwendeten Bechermaterialien wie Polystyrol, Polyester oder Polyvinylchlorid zu verschließen. Die Versiegelung sollte dazu gegenüber beiden Folienmaterialien über zumindest vergleichbare, wenn nicht bessere, Siegel- und Barriereeigenschaften verfügen, als die bereits etablierten Heißsiegelsysteme (z.B. Degalan ^{®} PM 555) gegenüber Aluminiumfolien. Ferner soll dieses Bindemittel gegenüber etablierten Systemen gegen Aluminiumfolien eine mindestens gleichwertige Siegelleistung aufweisen.

Es bestand darüber hinaus die Aufgabe, hohe Haftfestigkeit bereits bei relativ hohen Temperaturen direkt nach der Versiegelung zu erreichen, (hohe Wärmestandfestigkeit), da so kurze Zykluszeiten beim Versiegeln der Folie und beim Lebensmittelverpacker erreicht werden.

### Lösung

Die Aufgaben werden gelöst durch ein Anspruch 1. Es wurde gefunden, dass dieses heißsiegelfähige, zur Versiegelung verschiedenartiger Untergründe geeignete Beschichtungssystem sehr gut Polyesterfolien bzw. PET-beschichtete Folien gegen Polystyrol, Polyvinylchlorid und Polyester heißsiegelt.

Als ein Polymertyp A wird, ein Polyester verwendet, der unter Copolymerisation von Itaconsäure hergestellt wurde.
Überraschend wurde gefunden, dass ein Beschichtungssystem, enthaltend eine filmbildende Dispersion, dadurch gekennzeichnet, dass
der Polymertyp A ein Polyester ist, der unter Copolymerisation von Itaconsäure hergestellt wurde,
der Polymertyp B, ein (Meth)acrylathomo- oder/und -copolymer ist, enthaltend Standardmethacrylate und/oder Standardacrylate und
der Polymertyp AB, ein Pfropfcopolymer aus Polymertyp A und Polymertyp B ist und dass die Menge an Polymertyp A zwischen 5 Gew.-% und 60 Gew.-% beträgt,
dass die Menge an Polymertyp B zwischen 5 Gew.-% und 70 Gew.-% beträgt,
dass die Menge an Polymertyp AB zwischen 5 Gew.-% und 60 Gew.-% beträgt, bezogen auf die Gesamtmasse der Polymertypen A, B und AB,
und dass das Masseverhältnis der Summe der Polymertypen A, B und AB zur Masse des Lösungsmittels oder des Lösungsmittelgemischs L zwischen 5:1 und 1:5 beträgt, ein hervorragendes heißsiegelfähiges, zur Versiegelung verschiedenartiger Untergründe geeignetes System ist, das sowohl Polyesterfolie, als auch Aluminiumfolie bzw. sowohl Aluminium- als auch PET-beschichtete Folien gegen Polystyrol, Polyester und Polyvinylchlorid heißsiegelt.

Es wurde gefunden, dass bei den üblichen Taktzeiten, die bei der Heißsiegelung von Kunststofffolien angewandt werden, ausreichend hohe Festigkeiten des Verschlusses erreicht werden.
Die Versiegelung zeigt gegenüber beiden Folienmaterialien vergleichbare Siegel-und Barriereeigenschaften, wie die bereits etablierten Heißsiegelsysteme (z.B. DEGALAN ^{®} PM 555) gegenüber Aluminiumfolien.
Es wurde eine hohe Haftfestigkeit bereits bei relativ hohen Temperaturen direkt nach der Versiegelung erreicht, (hohe Wärmestandfestigkeit). Damit können kurze Zykluszeiten beim Versiegeln erreicht werden.

### Der Polymertyp A

Als Polymertyp A werden erfindungsgemäß Copolyester verwendet, die sich durch Itaconsäure als Monomerbaustein auszeichnen. Die Copolyester im Sinne der Erfindung haben eine lineare oder verzweigte Struktur und sind gekennzeichnet durch
- OH-Zahlen von 5 bis 150 mg KOH / g, vorzugsweise von 10 bis 50 mg KOH / g
- Säurezahlen von unter 10 mg KOH / g, bevorzugt unter 5 mg KOH / g und besonders bevorzugt unter 2 mg KOH / g.
- ein zahlenmittleres Molekulargewicht von 700 - 25000 g / mol, vorzugsweise 2000 - 12000 g / mol.

Der Gehalt an Itaconsäure in den erfindungsgemäßen Polyestern liegt im Bereich zwischen 0.1 Mol% und 20 Mol%, bevorzugt zwischen 1 Mol% und 10 Mol% und ganz besonders bevorzugt zwischen 2 Mol% und 8 Mol%, bezogen auf die Gesamtmenge an eingesetzten Polycarbonsäuren. Ansonsten ist die Art der für die erfindungsgemäßen Copolyester eingesetzten Polycarbonsäuren an sich beliebig. So können aliphatische und/oder cycloaliphatische und/oder aromatische Polycarbonsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für aliphatische Polycarbonsäuren mit kürzeren Ketten sind Bernsteinsäure, Glutarsäure, Adipinsäure, Azelainsäure, Sebacinsäure, Dodecandisäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Hydroxylpolyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentylglykol, Butylethylpropandiol-1,3, Methylpropandiol-1,3, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Neben Polyolen und Dicarbonsäuren können auch Lactone für die Synthese der Hydroxylpolyester verwendet werden.

Die erfindungsgemäßen Copolyester mit Itaconsäuregehalten zwischen 0.1 Mol% und 20 Mol%, bevorzugt zwischen 1 Mol% und 10 Mol% und ganz besonders bevorzugt zwischen 2 Mol% und 8 Mol%, bezogen auf die Gesamtmenge an eingesetzten Polycarbonsäuren werden mittels etablierter Techniken für (Poly-)Kondensationsreaktionen hergestellt.

Es kann auch unter gleizeitigem Vorliegen eines Polymers des Typs A und eines Initiators Monomere, die zur Komponente B führen, polymerisiert werden.

Die Mengen, die an Polymertyp A vor der Pfropfreaktion in der erfindungsgemäßen Mischung eingesetzt werden, liegen zwischen 10 Gew.-% und 90 Gew.-%, bevorzugt zwischen 25 Gew.-% und 75 Gew.-% und ganz besonders bevorzugt zwischen 40 Gew.-% und 60 Gew.-%.

Die Mengen, die an Polymertyp A in der erfindungsgemäßen Mischung nach der Reaktion vorliegen, liegen zwischen 5 Gew.-% und 60 Gew.-%, bevorzugt zwischen 5 Gew.-% und 50 Gew.-% und ganz besonders bevorzugt zwischen 5 Gew.-% und 40 Gew.-%.

### Der Polymertyp B

Der Polymertyp B kann als Nebenprodukt bei der Synthese des Pfropfcopolymerisats AB entstehen. Die Zusammensetzung der B-Ketten in dem Produktbestandteil AB entspricht ebenfalls der folgenden Beschreibung:
Polymertyp bzw. Kettensegment B besteht definitionsgemäß aus Polyacrylat-und/oder Polymethacrylat-Sequenzen. Diese sind für sich genommen, z. B. in Form eines entsprechenden Homo- oder Copolymerisats im Lösungsmittelsystem L löslich. Das Polymerisat B ist im Allgemeinen zu mehr als 50 Gew.-%, vorzugsweise zu 80 Gew.-% bis 100 Gew.-% aufgebaut aus Monomeren der Formel I 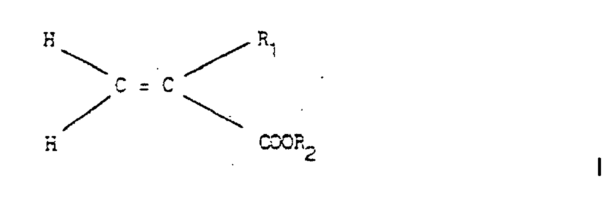
worin R₁ für Wasserstoff oder Methyl und R₂ für einen Alkylrest, einen aliphatischen oder aromatischen Rest mit 1 bis 30 Kohlenstoffatomen, vorzugsweise 1 bis 20 Kohlenstoffatomen, steht.

Im Polymer B können ferner enthalten sein:
Monomere der Formel II 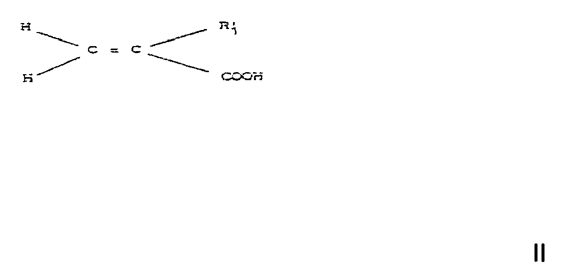 worin R'₁ für Wasserstoff oder Methyl steht oder/und polymerisationsfähige Säureanhydride und/oder Monomere der Formel III 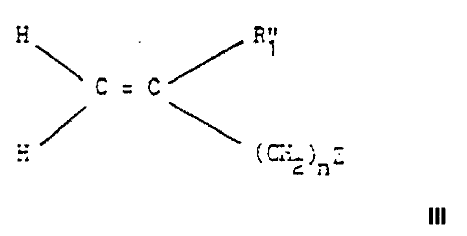 worin R"₁ Wasserstoff oder Methyl und Z einen gegebenenfalls alkylsubstituierterten Phenylrest, einen -COR₃-Rest, einen 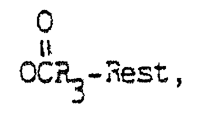 einen -OR₄-Rest oder ein Chloratom bedeutet und worin R₃ und R₄ für einen gegebenenfalls verzweigten Alkylrest mit 1 bis 20 Kohlenstoffatomen oder für einen Phenylrest und n für 0 oder 1 steht,
   und/oder Monomeren der Formel IV 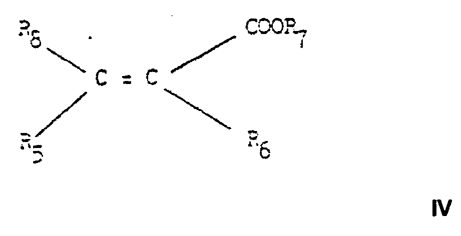 worin R₅ und R₆ Wasserstoff oder einen Rest -COOR'₇, R₆, Wasserstoff oder einen Rest --CH₂COOR"₇ bedeuten mit der Maßgabe. daß die Verbindung der Formel IV zwei carboxylhaltige Gruppen enthalten muß und worin R₇, R'₇ und R"₇ für Wasserstoff oder einen gegebenenfalls verzweigten Alkylrest mit 1 bis 20 Kohlenstoffatomen oder Phenyl stehen. Das Polymere B kann gegebenenfalls noch Anteile der Monomeren der Formel V enthalten 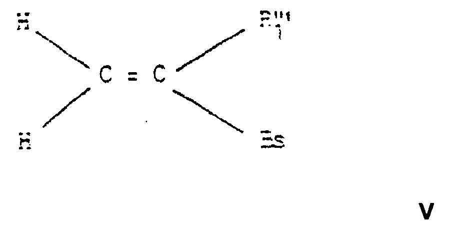 worin R"'₁ die Bedeutung von R₁ besitzt und Bs für einen stickstoffhaltigen funktionellen Rest wie eine -CN Gruppe, eine Gruppe -CONR₉R₁₀ worin R₉ und R₁₀ unabhängig voneinander für Wasserstoff oder einen Alkylrest mit 1 bis 20 Kohlenstoffatomen steht, oder worin R₉ und R₁₀ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierte Derivate derselben steht oder Bs die Bedeutung - CH₂OH besitzt, oder worin Bs die Bedeutung
   -COO-Q-R₁₁
   besitzt, worin Q für einen, gegebenenfalls alkylsubstituierten Alkylenrest mit 2 bis 8 Kohlenstoffatomen und R_{1I}, für -OH, für -OR"'₇ oder für einen Rest -NR'₉R'₁₀ steht, wobei R"'₇, R'₉ und R'₁₀ die gleichen Bedeutungen wie R₇, R₈ und R₉ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Als Beispiele für die Monomere der Formel I werden Methylmethacrylat, Ethylmethacrylat, Propylmethacrylat, Butylmethacrylat und Isobutylmethacrylat genannt. Die Monomere der Formel I werden auch als Standardmethacrylate bezeichnet.

Als Beispiele für die Monomere der Formel II werden Acrylsäure oder Methacrylsäure genannt.

Als Beispiele für Monomeren der Formeln III bzw. IV seien besonders genannt Styrol, α -Methylstyrol, Vinylchlorid, Vinylacetat, Vinyilstearat, Vinylmethylketon, Vinylisobutyläther, Allylacetat, Allylchlorid, Allylisobutylether, Allylmethylketon, Dibutylmaleinat, Dilaurylmaleinat, Dibutylitaconat. Der Anteil der Monomeren der Formel II-V am Polymer B liegt im Allgemeinen zwischen 0 Gew.-% und 50 Gew.-%, vorzugsweise bei 0 Gew.-% bis 20 Gew.-%, (bezogen auf die Monomeren des Polymer B). Der Anteil der Monomeren der Formeln II und/oder V am Polymer B wird im allgemeinen 20 Gew.-% nicht überschreiten, in der Regel liegt er bei 0 Gew.-% bis 10 Gew.-%, vorzugsweise 0 Gew.-% bis 5 Gew.-%.

Im Einzelnen wird das Polymer B nach Anteil und Zusammensetzung zweckmäßigerweise im Hinblick auf die gewünschte technische Funktion gewählt werden.

Die Mengen Monomer, die nach der Polymerisation Polymertyp B bildend in der erfindungsgemäßen Mischung eingesetzt werden, liegen zwischen 10 Gew.-% und 90 Gew.-%, bevorzugt zwischen 25 Gew.-% und 75 Gew.-% und ganz besonders bevorzugt zwischen 40 Gew.-% und 60 Gew.-%.

Die Mengen, die an Polymertyp B in der erfindungsgemäßen Mischung nach der Reaktion vorliegen, liegen zwischen 5 Gew.-% und 70 Gew.-%, bevorzugt zwischen 5 Gew.-% und 60 Gew.-% und ganz besonders bevorzugt zwischen 5 Gew.-% und 40 Gew.-%.

### Der Polymertyp AB

### Herstellung der Pfropfpolymerisate AB

Das erfindungsgemäße Verfahren zur Herstellung eines Pfropfcopolymerisats AB zeichnet sich dadurch aus, dass durch Reaktion eines geeigneten, weiter unten beschriebenen Initiators mit Doppelbindungen von Itaconsäurewiederholungseinheiten im Polymer des Typs A reaktive (radikalische) Zentren für eine radikalische Polymerisation von (Meth)acrylaten gebildet werden. Mit reaktiven Zentren sind Polymerketten gemeint, die eine oder mehrere Initiatoreinheiten für eine radikalische Polymerisation aufweisen. Diese Initiatoreinheiten können simultan oder auch zeitlich versetzt gebildet werden. Somit können Itaconsäureeinheiten auch durchaus erst aktiviert werden, nachdem andere die an anderen Itaconsäuren gebildeten Radikale durch Abbruchreaktionen deaktiviert wurden.

Das Pfropfpolymerisat AB wird in der Regel hergestellt, indem man auf der Komponente A Monomere des Typs I-V, die zur Komponente B führen, unter den dafür geeigneten Reaktionsbedingungen aufpfropft. Der Polymertyp AB ist ein Pfropfcopolymer mit einer Polyesterhauptkette und einer Poly(meth)acrylatseitenkette.

Dazu stellt man eine 10 Gew.-% - 50 Gew.-%, vorzugsweise 20 Gew.-% - 30 Gew.-%, Lösung eines Itaconsäure haltigen Polyesters in einem geeigneten, unter Polymerisationsbedingungen inerten Lösungsmittel, das im Normalfall einen Siedepunkt oberhalb der Verfahrenstemperatur besitzt, her. Als Lösungsmittel kommen z.B. Essigester wie Ethyl-, Propyl- oder Butylacetat, aliphatische Lösungsmittel wie Isooctan, cycloaliphatische wie Cyclohexan und carbonylische wie Butanon in Frage.

Der Anteil des Lösungsmittels oder des Lösungsmittelgemisches an den erfindungsgemäß konzentrierten Polymerisatdispersionen kann z.B. 80 Gew.-%, in besonders günstigem Fall bis herab zu 20 Gew.-% betragen, vorzugsweise unter 70 Gew.-%, praktisch meist 60 Gew.-% bis 40 Gew.-%.

Zu den Polyester-Lösungen gibt man die Monomeren der Formel I bzw. eventuell die anderen Monomeren II-V in den angegebenen Verhältnissen und polymerisiert unter Zusatz eines oder mehrerer, vorzugsweise peroxidischer Radikal-Initiatoren bei Temperaturen von -10 °C bis 100 °C innerhalb von gewöhnlich 4 - 8 Stunden. Anzustreben ist ein möglichst vollständiger Umsatz. Vorzugsweise finden Azoverbindungen wie AIBN oder Perester wie tert.-Butylperoctoat als Radikalinitiator Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,1 Gew.-%, und 3 Gew.-%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, z.B. Dodecyirnercaptan. Die Konzentrationen an Reglern liegen im Allgemeinen bei 0.1 Gew.-%, bis 1,0 Gew.-%, bezogen auf das Gesamtpolymerisat.

Neben der beschriebenen Methode der Lösungspolymerisation kann die Synthese der Pfropfcopolymere des Typs AB auch in Substanz vorgenommen werden. Dazu werden die Polyester vor der Initierung der radikalischen Polymerisation in der (meth)acrylischen Monomermischung gelöst.

Alternativ kann Radikal-Initiator auch in einer Schmelze des Polyesters vorgelegt und anschließend mit der Monomermischung versetzt werden.

Die Mengen des an Polymertyp AB nach der Pfropfreaktion in der erfindungsgemäßen Mischung vorliegt, liegen zwischen 5 Gew.-% und 60 Gew.-%, bevorzugt zwischen 20 Gew.-% und 55 Gew.-% und ganz besonders bevorzugt zwischen 30 Gew.-% und 50 Gew.-%.

### Der Polymertyp D oder D_{A}

Zur Verbesserung der Aluminium-Haftung ist eine Formulierung mit Polymertyp D eine Option: Durch eine Grundierung der Folie oder durch Zugabe von 0,1 Gew.-% bis 10 Gew.-%, besser von 0,1 Gew.-% bis 5 Gew.-% Polyvinylchlorid in die Lackformulierung kann eine Verbesserung der Al-Haftung beobachtet werden. Eingesetzt wird z.B. VINYLITE ^{®} VMCH (Vertrieb durch Union Carbide).

Polymertyp D_{A} kann optional zur Verminderung eines möglichen Abriebes in der Verarbeitung zugesetzt werden. Eingesetzt werden kann ein Polyamid z.B. des Typs VESTOSIND ^{®} 2159 (Fa. Degussa AG). Dieser kann in einem Formulierungsanteil zwischen 0,1 Gew.-% und 10 Gew.-%, besser zwischen 0,1 Gew.-% und 5 Gew.-% zugegeben werden.

Aus Vorversuchen ist bekannt, dass eine PET-Haftung mit einem wie oben beschriebenen Bindemittelsystem aus den Komponenten A, B, AB und gegebenenfalls D bzw. D_{A} in einem Lösungsmittelsystem aus n-Butylacetat und Ethylmethylketon (z.B. analog zu DEGALAN ^{®} PM 555) in Formulierung mit der Polymerkomponente C unabhängig von deren Konzentration nur mit unbefriedigenden Siegelfestigkeiten vorliegt. Eine Umstellung des Lösungsmittelsystems auf eine unten beschriebene, erfindungsgemäße Zusammensetzung führt dagegen in geeigneter Formulierung mit Polymerkomponente C zu sehr guten Heißsiegeleigenschaften.

### Das Lösungsmittel oder Lösungsmittelsystem L

Neben den Polymertypen A, B und C, den Pfropfpolymeren AB und CB und gegebenenfalls dem Polymertyp D oder D_{A} befindet sich noch ein Lösungsmittelsystem L in dem erfindungsgemäßen Heißsiegelsystem.

Die für das Lösungsmittelsystem L zu verwendenden Lösungsmittel sind so auszuwählen, dass sie den Erfordernissen der Beschichtungstechnologie für Kunststoffe und Metalle entsprechen. Die - gegebenenfalls im Gemisch - anzuwendenden Lösungsmittel sollen inert und im Ganzen unbedenklich sein, wobei der Siedepunkt 105 °C bei 760 Torr möglichst nicht überschreitet.

Als Lösungsmittel kommt ein Gemisch aus Estern aliphatischer Carbonsäuren mit aliphatischen Alkoholen, Ketonen und aliphatischen Kohlenwasserstoffen in Frage. Als aliphatische Carbonsäure kommen Essigsäure, Propinsäure oder Buttersäure in Frage.

Als aliphatische Alkohole kommen Ethanol, Propanol, Isopropanol, n-Butanol, 2-Butanol, 2-Methyl-1-propanol oder 2-Methyl-2-propanol in Frage.

Als Ketone kommen z.B. Aceton oder Ethylmethylketon in Frage.

Als aliphatische Kohlenwasserstoffe kommen Pentan, Hexan, Heptan, Oktan, iso-Octan, Nonan, Decan, Undecan oder Dodecan in Frage.

Die aliphatischen Kohlenwasserstoffe können auch in Form ihrer Isomerengemische und in Gemischen untereinander vorliegen. Es können auch Cycloalkane und substituierte Cycloalkane eingesetzt werden.

Auch Gemische aus den vorstehend beschriebenen Lösungsmitteln kommen für das Trägersystem infrage. Der Anteil des Lösungsmittels oder des Lösungsmittelsystems L an den erfindungsgemäß konzentrierten Polymerisatdispersionen kann z. B. 80 Gew.-%, in besonders günstigem Fall bis herab zu 20 Gew.-% betragen, vorzugsweise unter 70 Gew.-%, praktisch meist 55 Gew.-% bis 40 Gew.-%.

Dem heißsiegelfähigen, zur Versiegelung verschiedenartiger Untergründe geeigneten Beschichtungssystem können darüber hinaus die für das Heißsiegeln üblichen Hilfs- und Zusatzstoffe zugefügt werden.

### Herstellung des Heißsiegelsystems

### Synthese mit den Polymertypen A - D

### Alternative A:

Mit Hilfe eines geeigneten Emulgators wird, wie vorstehend erläutert, eine Dispersion oder bei geeigneter Abstimmung der Polymerverträglichkeit eine homogene Lösung der Komponenten A und C im Lösungsmittelsystem L hergestellt und unter geeigneten Reaktionsbedingungen Monomere des Typs I-V, die zur Komponente B führen, gleichzeitig auf die Komponenten A und C gepfropft. Im Allgemeinen stehen die Anteile von A und B in Gewichtsverhältnissen von 1 zu 5 bis 5 zu 1. Das Gewichtsverhältnis von A zu C liegt in der Regel zwischen 1 zu 2 und 10 zu 1, bevorzugt zwischen 1 zu1 und 5 zu 1.

Der Gehalt des gesamten Polymerisats, bezogen auf die gesamte Dispersion beträgt mindestens 10 Gew.-%, wobei in der Praxis 40 Gew.-% bis 80 Gew.-% angestrebt werden, im Normalfall 45 Gew.-% bis 60 Gew.-%.

Nach dem erfindungsgemäßen Verfahren werden heißsiegelfähige Beschichtungsmassen in Dispersion erhalten, die eine ausreichende Stabilität für den Verarbeitungsprozess besitzen. Die Stabilität der Dispersionen beträgt mindestens mehrere Tage, im Normalfall mehrere Wochen bis Monate.

Damit ergeben sich viele Einsatzgebiete für die erfindungsgemäßen Beschichtungssysteme. Hervorzuheben sind die Verwendungen von Beschichtungssystemen nach Anspruch 1, die Polyesterfolien bzw. PET-beschichtete Folien gegen Polystyrol, Polyester und Polyvinylchlorid heißsiegeln können. Beschichtungssyteme gemäß der Ansprüche 4 und 13 finden Verwendung beim Heißsiegeln von Polyesterfolie aber auch Aluminiumfolie bzw. sowohl Aluminium- als auch PET-beschichteten Folien gegen Polystyrol, Polyester und Polyvinylchlorid. Die Beschichtungssysteme nach Anspruch 2, 11 und 15 finden Anwendung beim Heißsiegeln von Polyesterfolie aber auch Aluminiumfolie bzw. sowohl Aluminium- als auch PET-beschichteten Folien gegen Polystyrol, Polyester und Polyvinylchlorid, aber auch gegen Polypropylen und Polyethylen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Verwendetes Folienmaterial

### Weichaluminiumfolie mit einer Dicke von 40 µm

Polypropylenfolie, extrudiert aus Granulat JE 6100 (Fa. Shell), Dicke 0,2 mm Polyesterfolie: Hostaphan ^{®} WDW 50

### Auftrag der Heißsiegellösung im Labor

Die Heißsiegellösung wurde mit dem K-Handcoater Nr. 4 aufgezogen. Dabei wurden Trockenschichtdicken von 7 µm - 9 µm erhalten.

### Trocknung der beschichteten Folien im Labor

Die grundierten Folien wurden nach kurzer Ablüftzeit (5 - 10 Minuten) 15 Sekunden bei 180°C im Umluftofen getrocknet.

### Heißversiegelung und Ermittlung der Siegelnahtfestigkeit

Die Versiegelungen wurden mit dem Heißsiegelgerät (HSG/ET) der Fa. Brugger durchgeführt.

### Siegelbedingungen:

| | |
|---|---|
| Temperatur: | 200°C |
| Druck: | 6 bar |
| Zeit: | 1 sec. |
| Siegelfläche: | 10 x 10 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Die Versiegelungen der PP-Becher erfolgten mit einem Labor-Becherversieglungsgerät VL-1600 der Firma BHS.

### Komponente A:

In Tabelle 1 sind die Charakteristika der hier als Beispiele für die Komponente A verwendete Copolyester (Typ 1) aufgeführt. Es handelt sich dabei um teilaromatische Copolyester mit unterschiedlichen Itaconsäuregehalten, bezogen auf die Gesamtmenge an Polycarbonsäuren. Der außerdem aufgeführte Typ 0 ohne Itaconsäure dient zum Effizienz-Vergleich im Hinblick auf die nachfolgenden Beispiele für Heißsiegelanwendungen.

**Tabelle 1: Charakteristika der verwendeten Polyester**

| Polyester | Itaconsäuregehalt | T_{g} | M_{w} |
|---|---|---|---|
| Typ 0 | - | 30 °C | 18.900 |
| Typ 1 | 3,0 Mol-% | 33 °C | 15.800 |

### Rezeptur der Heißsiegellösung bestehend aus A, B und AB

### Beispiel 1

In einem Doppelmantelgefäß mit angeschlossenem Thermostaten, Rückflusskühler, Blattrührer und Innenthermometer werden 55 g Propylacetat und 24 g Polyester des Typs 1 vorgelegt. Unter Rühren wird der Polyester bei 85 °C vollständig aufgelöst und anschließend mit 0,5 g t-Butyl-per-2-ethylhexanoat versetzt. Um eine optimale Ausbeute freier Radikale entlang der Polyesterketten zu bilden, wird diese Lösung über einen Zeitraum von 30 min bei 85 °C gerührt, bevor mittels einer Dosierpumpe eine Mischung aus 16,0 g Methylmethacrylat und 16,0 g Butylmethacrylat zügig zudosiert wird.

Nach insgesamt 150 min Reaktionszeit wird die Polymerlösung abgekühlt und zur Verringerung der Lösungsviskosität mit 13,5 g Propylacetat verdünnt.

### Vergleichsbeispiel 1

Analoge Durchführung zu Beispiel 1b unter Verwendung des Polyesters des Typs 0 anstelle des Typs 1.

### Beispiel 2

In einem Doppelmantelgefäß mit angeschlossenem Thermostaten, Rückflusskühler, Blattrührer und Innenthermometer werden 42 g Propylacetat und 12,8 g Polyester des Typs 1 vorgelegt. Unter Rühren wird der Polyester bei 90 °C vollständig aufgelöst, 30 min gerührt und anschließend mit 0,15 g t-Butyl-per-2-ethylhexanoat versetzt. Um eine optimale Ausbeute freier Radikale entlang der Polyesterketten zu bilden, wird diese Lösung über einen Zeitraum von 30 min bei 90 °C gerührt, bevor mittels einer Dosierpumpe eine Mischung aus 12 g Methylmethacrylat, 12 g Butylmethacrylat und weiteren 0,15 g t-Butyl-per-2-ethylhexanoat zügig zudosiert werden.

In Tabelle 2 sind die Ergebnisse der Pfropfversuche aus den Beispielen zusammengefasst.

**Tabelle 2: Ergebnisse der Pfropfversuche**

| | Itaconsäuregehalt im Polyesteranteil | M_{w} (RI) | M_{w} (Polyester) | HSF (N/15 mm) PET/PS |
|---|---|---|---|---|
| Bsp. 1 | 0,4 Mol-% | 102.000 (bimodal) | 15.800 | 5,7 |
| Bsp. 2 | 0,5 Mol-% | 38.100 (breiter Peak) | 15.800 | 4,1 |
| Vergl. 1 | nicht vorhanden | 28.800 (bimodal) | 18.900 | 0,0 |

| | | | | |
|---|---|---|---|---|
| n.b. = nicht bestimmt HSF = Heißsiegelfestigkeit | | | | |

Vergleich der Molekulargewichte zeigt im Falle des Vergleichbeispiels ein bimodales Produkt, in dem neben dem Polyester-Eduktpeak eine zweite Polymerfraktion bestehend aus Polymethacrylaten vorliegt. Im Gegensatz dazu weisen die Produkte aus Beispiel 2 und insbesondere aus Beispiel 1 eindeutig Pfropfcopolymerisate auf. Das Vorliegen dieser als Kompatibilisierer wirkenden Produkten in einer Lösungsformulierung mit den sonst unverträglichen Homopolymeren A und B führt zu einem Heißsiegellack, der ohne Formulierungszusätze bereits gute Heißsiegelnahtfestigkeiten für das System PET gegen PS aufweist.

## Patentansprüche

1. Heißsiegelfähiges, zur Versiegelung verschiedenartiger Untergründe geeignetes Beschichtungssystem, enthaltend eine filmbildende Dispersion,
**dadurch gekennzeichnet, dass**
ein Polymertyp A, bei dem es sich um einen Copolyester oder um ein Copolyestergemisch mit linear oder verzweigte Struktur mit einer OH-Zahl von 5 bis 150 mg KOH / g, einer Säurezahl von unter 10 mg KOH /g, einem zahlenmittleren Molekulargewicht von 700 bis 25 000 g / mol und bezogen auf die Gesamtmenge an eingesetzten Polycarbonsäuren zwischen 0,1 Mol% und 20 Mol% Itaconsäure handelt, enthalten ist,
ein Polymertyp B, bei dem es sich um ein (Meth)acrylathomo- oder/und - copolymer, enthaltend Standardmethacrylate und/oder Standardacrylate handelt, enthalten ist und
ein Polymertyp AB, bei dem es sich um ein Pfropfcopolymer aus dem Copolyester oder dem Copolyestergemisch des Polymertyps A und dem (Meth)acrylathomo- oder/und -copolymer des Polymertyps B handelt, enthalten ist und
dass die Menge an Polymertyp A zwischen 5 Gew.-% und 60 Gew.-% beträgt,
dass die Menge an Polymertyp B zwischen 5 Gew.-% und 70 Gew.-% beträgt,
dass die Menge an Polymertyp AB zwischen 5 Gew.-% und 60 Gew.-% beträgt, bezogen auf die Gesamtmasse der Polymertypen A, B und AB,
und dass das Masseverhältnis der Summe der Polymertypen A, B und AB zur Masse des Lösungsmittels oder des Lösungsmittelgemischs L zwischen 5:1 und 1:5 beträgt.

2. Heißsiegelfähiges, zur Versiegelung verschiedenartiger Untergründe geeignetes Beschichtungssystem gemäß Anspruch 1, **dadurch gekennzeichnet, dass** es sich bei Polymertyp A um einen Polyester handelt, dessen Anteil an Itaconsäure bezogen auf die Gesamtmemge an eingesetzten Polycarbonsäuren zwischen 2 Mol-% und 8 Mol-% beträgt.

3. Heißsiegelfähiges, zur Versiegelung verschiedenartiger Untergründe geeignetes Beschichtungssystem gemäß Anspruch 1, **dadurch gekennzeichnet, dass** es sich bei dem Polymertyp AB um ein Pfropfcopolymer mit einer Polyesterhauptkette und Poly(meth)acrylatseitenkette handelt.

4. Heißsiegelfähiges, zur Versiegelung verschiedenartiger Untergründe geeignetes Beschichtungssystem gemäß Anspruch 1, **dadurch gekennzeichnet, dass** unter gleichzeitigem Vorliegen eines Polymers des Typs A und eines Initiators Monomere, die zur Komponente B führen, polymerisiert werden.

5. Heißsiegelfähiges, zur Versiegelung verschiedenartiger Untergründe geeignetes Beschichtungssystem gemäß Anspruch 1, **dadurch gekennzeichnet, dass** durch Reaktion des Initiators mit Doppelbindungen von Itaconsäurewiederholungseinheiten im Polymer des Typs A reaktive Zentren für eine radikalische Polymerisation von (Meth)acrylaten gebildet werden und diese zu Pfropfcopolymeren AB weiterreagieren.

6. Heißsiegelfähiges, zur Versiegelung verschiedenartiger Untergründe geeignetes Beschichtungssystem gemäß Anspruch 1, **dadurch gekennzeichnet, dass** ein Polymertyp D, ein Polyvinylchlorid enthalten ist und/oder ein Polymertyp D_{A}, ein Polyamid enthalten ist.

7. Heißsiegelfähiges, zur Versiegelung verschiedenartiger Untergründe geeignetes Beschichtungssystem gemäß Anspruch 6, **dadurch gekennzeichnet, dass** die Menge an Polymertyp D zwischen 0,1 Gew.-% und 10 Gew.-% beträgt und die Menge an Polymertyp D_{A} zwischen 0,1 Gew.-% und 10 Gew.-% beträgt, bezogen auf die Gesamtmasse der Polymertypen A, B, AB, D und D_{A} und dass das Massenverhältnis der Summe der Polymertypen A, B, AB, D und D_{A} zur Masse des Lösungsmittels oder des Lösungsmittelgemisches L zwischen 5:1 und 1 :5 beträgt.

8. Heißsiegelfähiges, zur Versiegelung verschiedenartiger Untergründe geeignetes Beschichtungssystem gemäß Anspruch 1, **dadurch gekennzeichnet, dass** für das Heißsiegeln übliche Hilfs- und Zusatzstoffe enthalten sind.

9. Verfahren zur Versiegelung heißsiegelfähiger Untergründe, **dadurch gekennzeichnet, dass** ein Beschichtungssystem nach einem der vorstehenden Ansprüche verwendet wird.

10. Verfahren gemäß Anspruch 9 zur Versiegelung von Polyesterfolie bzw. PETbeschichteter Folie gegen Polystyrol, Polyester und Polyvinylchlorid mit Beschichtungssystemen gemäß Anspruch 1.

11. Verfahren gemäß Anspruch 9 zur Versiegelung von Polyesterfolie oder Aluminiumfolie bzw Aluminium- oder PET-beschichteten Folien gegen Polystyrol, Polyester und Polyvinylchlorid mit Beschichtungssystemen gemäß der Ansprüche 2 und 8.

12. Verwendung des Beschichtungssystems gemäß mindestens einem der Ansprüche 1 bis 8 zum Heißsiegeln von Aluminiumfolie oder Polyesterfolie bzw. Aluminium- oder PET-beschichteten Folien gegen Polystyrol, Polyester und Polyvinylchlorid.

## Claims

1. Heat-sealable coating system suitable for the sealing of various types of substrate and comprising a film-forming dispersion,
**characterized in that**
a polymer type A is present and is a copolyester or a copolyester mixture having a linear or branched structure and an OH number of from 5 to 150 mg KOH/g, an acid number below 10 mg KOH/g, a number-average molar mass of from 700 to 25 000 g/mol and, based on the total amount of polycarboxylic acids used, between 0.1 mol% and 20 mol% of itaconic acid,
a polymer type B is present and is a (meth)acrylate homo- or/and copolymer, containing standard methacrylates and/or standard acrylates, and
a polymer type AB is present and is a graft copolymer composed of the copolyester or the copolyester mixture of polymer type A and the (meth)acrylate homo- or/and copolymer of polymer type B, and
the amount of polymer type A is from 5% by weight to 60% by weight,
the amount of polymer type B is from 5% by weight to 70% by weight,
the amount of polymer type AB is from 5% by weight to 60% by weight,
based on the total weight of the polymer types A, B and AB,
and that the ratio by weight of the entirety of the polymer types A, B and AB to the weight of the solvent or of the solvent mixture L is from 5:1 to 1:5.

2. Heat-sealable coating system according to Claim 1 suitable for the sealing of various types of substrate, **characterized in that** polymer type A is a polyester whose proportion of itaconic acid, based on the total amount of polycarboxylic acids used, is from 2 mol% to 8 mol%.

3. Heat-sealable coating system according to Claim 1 suitable for the sealing of various types of substrate, **characterized in that** the polymer type AB is a graft copolymer having a polyester main chain and poly(meth)acrylate side chain.

4. Heat-sealable coating system according to Claim 1 suitable for the sealing of various types of substrate, **characterized in that** simultaneous presence of a polymer of type A and of an initiator is involved in polymerization of monomers which lead to component B.

5. Heat-sealable coating system according to Claim 1 suitable for the sealing of various types of substrate, **characterized in that** reaction of the initiator with double bonds of itaconic acid repeat units in the polymer of type A forms reactive centres for free-radical polymerization of (meth)acrylates and these react further to give graft copolymers AB.

6. Heat-sealable coating system according to Claim 1 suitable for the sealing of various types of substrate, **characterized in that** a polymer type D is present and is a polyvinyl chloride
and/or
a polymer type D_{A} is present and is a polyamide.

7. Heat-sealable coating system according to Claim 6 suitable for the sealing of various types of substrate, **characterized in that** the amount of polymer type D is from 0.1% by weight to 10% by weight and the amount of polymer type D_{A} is from 0.1% by weight to 10% by weight, based on the total weight of the polymer types A, B, AB, D and D_{A}, and that the ratio by weight of the entirety of the polymer types A, B, AB, D and D_{A} to the weight of the solvent or of the solvent mixture L is from 5:1 to 1:5.

8. Heat-sealable coating system according to Claim 1 suitable for the sealing of various types of substrate, **characterized in that** the material comprises auxiliaries and additives which are conventional for the heat-sealing process.

9. Process for the sealing of heat-sealable substrates, **characterized in that** a coating system according to one of the preceding claims is used.

10. Process according to Claim 9 for the sealing of polyester foil or of PET-coated foil with respect to polystyrene, polyester and polyvinyl chloride using coating systems according to Claim 1.

11. Process according to Claim 9 for the sealing of polyester foil or aluminium foil or of aluminium- or PET-coated foils with respect to polystyrene, polyester and polyvinyl chloride using coating systems according to Claims 2 and 8.

12. Use of the coating system according to at least one of Claims 1 to 8 for the heat-sealing of aluminium foil or polyester foil or of aluminium- or PET-coated foils with respect to polystyrene, polyester and polyvinyl chloride.

## Revendications

1. Système de revêtement thermoscellable, approprié pour le scellage de différents types de substrats, contenant une dispersion filmogène, **caractérisé en ce que**
un type de polymère A est contenu qui s'agit d'un copolyester ou un mélange de copolyesters de structure linéaire ou ramifiée d'un indice OH de 5 à 150 mg de KOH/g, d'un indice d'acidité inférieur à 10 mg de KOH/g, d'un poids moléculaire moyen en nombre de 700 à 25 000 g/mol et contenant, par rapport à la quantité totale d'acides polycarboxyliques utilisés, entre 0,1 % en moles et 20 % en moles d'acide itaconique,
un type de polymère B est contenu qui s'agit d'un homo- et/ou copolymère de (méth)acrylate, contenant des méthacrylates standard et/ou des acrylates standard, et un type de polymère AB est contenu qui s'agit d'un copolymère greffé constitué du copolyester ou du mélange de copolyesters du type de polymère A et du homo- et/ou copolymère de (méth)acrylate du type de polymère B, et
**en ce que** la quantité du type de polymère A est comprise entre 5 % en poids et 60 % en poids,
**en ce que** la quantité du type de polymère B est comprise entre 5 % en poids et 70 % en poids,
**en ce que** la quantité du type de polymère AB est comprise entre 5 % en poids et 60 % en poids,
par rapport à la masse totale des types de polymères A, B et AB,
et **en ce que** le rapport en masse entre la somme des types de polymère A, B et AB et la masse du solvant ou du mélange de solvants L est compris entre 5:1 et 1:5.

2. Système de revêtement thermoscellable, approprié pour le scellage de différents types de substrats, selon la revendication 1, **caractérisé en ce que** le type de polymère A est un polyester, dont la proportion d'acide itaconique par rapport à la quantité totale d'acides polycarboxyliques utilisés est comprise entre 2 % en moles et 8 % en moles.

3. Système de revêtement thermoscellable, approprié pour le scellage de différents types de substrats, selon la revendication 1, **caractérisé en ce que** le type de polymère AB est un copolymère greffé comprenant une chaîne principale polyester et une chaîne latérale poly(méth)acrylate.

4. Système de revêtement thermoscellable, approprié pour le scellage de différents types de substrats, selon la revendication 1, **caractérisé en ce que** des monomères conduisant au composant B sont polymérisés en présence simultanée d'un polymère de type A et d'un initiateur.

5. Système de revêtement thermoscellable, approprié pour le scellage de différents types de substrats, selon la revendication 1, **caractérisé en ce que** des centres réactifs pour une polymérisation radicalaire de (méth)acrylates sont formés par réaction de l'initiateur avec des doubles liaisons d'unités de répétition acide itaconique dans le polymère de type A et ceux-ci réagissent ensuite pour former des copolymères greffés AB.

6. Système de revêtement thermoscellable, approprié pour le scellage de différents types de substrats, selon la revendication 1, **caractérisé en ce qu'**un type de polymère D, un polychlorure de vinyle, est contenu et/ou un type de polymère D_{A}, un polyamide, est contenu.

7. Système de revêtement thermoscellable, approprié pour le scellage de différents types de substrats, selon la revendication 6, **caractérisé en ce que** la quantité du type de polymère D est comprise entre 0,1 % en poids et 10 % en poids et la quantité du type de polymère D_{A} est comprise entre 0,1 % en poids et 10 % en poids, par rapport à la masse totale des types de polymères A, B, AB, D et D_{A}, et **en ce que** le rapport en masse entre la somme des types de polymères A, B, AB, D et D_{A} et la masse du solvant ou du mélange de solvants L est compris entre 5:1 et 1:5.

8. Système de revêtement thermoscellable, approprié pour le scellage de différents types de substrats, selon la revendication 1, **caractérisé en ce que** des adjuvants et additifs usuels pour le thermoscellage sont contenus.

9. Procédé de scellage de substrats thermoscellables, **caractérisé en ce qu'**un système de revêtement selon l'une quelconque des revendications précédentes est utilisé.

10. Procédé selon la revendication 9 pour le scellage d'une feuille de polyester ou d'une feuille revêtue de PET contre du polystyrène, du polyester et du polychlorure de vinyle avec des systèmes de revêtement selon la revendication 1.

11. Procédé selon la revendication 9 pour le scellage d'une feuille de polyester ou d'une feuille d'aluminium ou de feuilles revêtues d'aluminium ou de PET contre du polystyrène, du polyester et du polychlorure de vinyle avec des systèmes de revêtement selon les revendications 2 et 8.

12. Utilisation du système de revêtement selon au moins l'une quelconque des revendications 1 à 8 pour le thermoscellage d'une feuille d'aluminium ou d'une feuille de polyester ou de feuilles revêtues d'aluminium ou de PET contre du polystyrène, du polyester et du polychlorure de vinyle.
